# EUROPEAN PATENT SPECIFICATION

(11) **EP 2 243 747 B1**
(45) Date of publication and mention of the grant of the patent: **27.06.2012**
(21) Application number: 10157910.0
(22) Date of filing: 26.03.2010
(51) Int. Cl.: C03B 25/02, C03B 25/06, C03B 25/10, C03B 29/02, C03B 35/26

(54) **Conveyor device with accumulation buffer used for heat treatment of glass containers in a continuous furnace**
Transportsvorrichtung mit akkumulierendem Puffer zur Wärmebehandlung von Glaswaren in einem kontinuierlichen Ofen
Dispositif de convoyage avec tampon d'accumulation utilisé pour le traitement thermique d'objets en verre dans un four continu

(30) Priority: 24.04.2009 IT MI20090702
(43) Date of publication of application: 27.10.2010
(73) Proprietor: Euromatic S.r.l., 24047 Treviglio (BG) (IT)
(72) Inventor: Gusmini, Francesco, 24040 Calvenzano BG (IT)
(74) Representative: Martegani, Franco

(56) References cited:
- EP-A- 0 960 863
- FR-A- 689 898
- JP-A- 6 024 753
- JP-A- 9 156 711
- US-A- 1 534 864

## Description

The present invention refers to a conveyor device with accumulation buffer as well as to a relative furnace for continuous heat treatment of glass containers.

It is known to carry out a continuous heat treatment of glass containers, for example with small sizes, such as vials, bottles, syringes, etc.., through a tunnel furnace inside which the glass containers are moved forwards arranged on a conveyor.

Conveyors of the type known to be used in such furnaces comprise, for example, a plurality of swinging cups, each suitable for containing a container, or they can comprise a plane, preferably provided with supports for the arrangement of the containers. In particular, the containers can be arranged slotted over a pin, or rested inclined held up by the neck portion on the support, or fitted in glasses, or held in the vertical position with pincers at one end.

It is known from the document EP0960863 to execute the continuous heating of glass objects without buffer zone, while the document US1534864 teaches to execute the continuous heating with a buffer zone but without transfer from one buffer to another buffer.

It is also known from the document JP09156711 to execute the loading/unloading of objects in a furnace with mechanical arms.

A drawback of the conveyors and of the furnaces described consists in the length of the conveyor itself, which leads to the device having substantial bulk. Moreover, the choice of the length of the conveyor is directly correlated to the duration of the heat treatment and cannot therefore be reduced at will.

A further drawback of known tunnel furnaces is related to the heat dispersion at the inlet and outlet of the tunnel chamber, which causes a temperature curve to be reached in the treatment of glass which is not always optimal.

The purpose of the present invention is that of making a conveyor device with accumulation buffer and a relative furnace for continuous heat treatment of glass containers having small plan dimensions.

Another purpose of the invention is that of making a furnace for continuous heat treatment of glass containers equipped with a heating chamber which is small and that optimises the treatment temperature curve.

Another purpose of the present invention is that of making a conveyor device with accumulation buffer and a relative furnace for continuous heat treatment of glass containers which are particularly simple and functional, and at low cost.

These purposes according to the present invention are achieved by making a conveyor device with accumulation buffer, in particular for a furnace for continuous heat treatment of glass containers, as outlined in claim 1. Further characteristics of the conveyor as well as of the relative furnace for continuous heat treatment of glass containers are provided in the dependent claims.

The characteristics and the advantages of a conveyor device with accumulation buffer as well as of a relative furnace for continuous heat treatment of glass containers according to the present invention shall become clearer from the following description, given as an example and not for limiting purposes, with reference to the attached schematic drawings, in which:

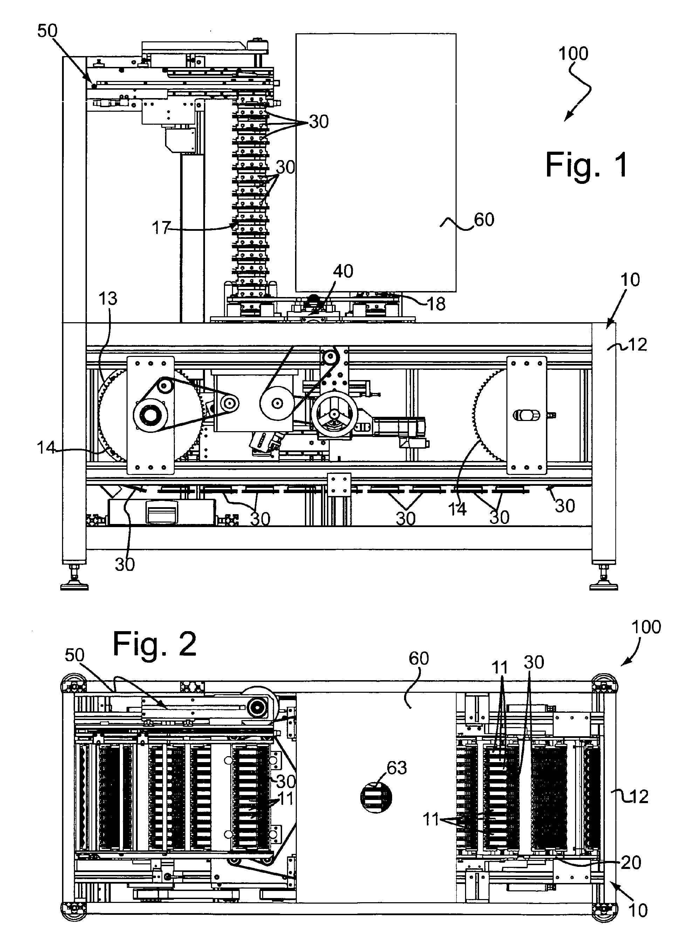

figures 1 and 2 are respectively a side elevational view and a plan view of a furnace for continuous heat treatment of glass containers comprising a conveyor device with accumulation buffer according to the invention;

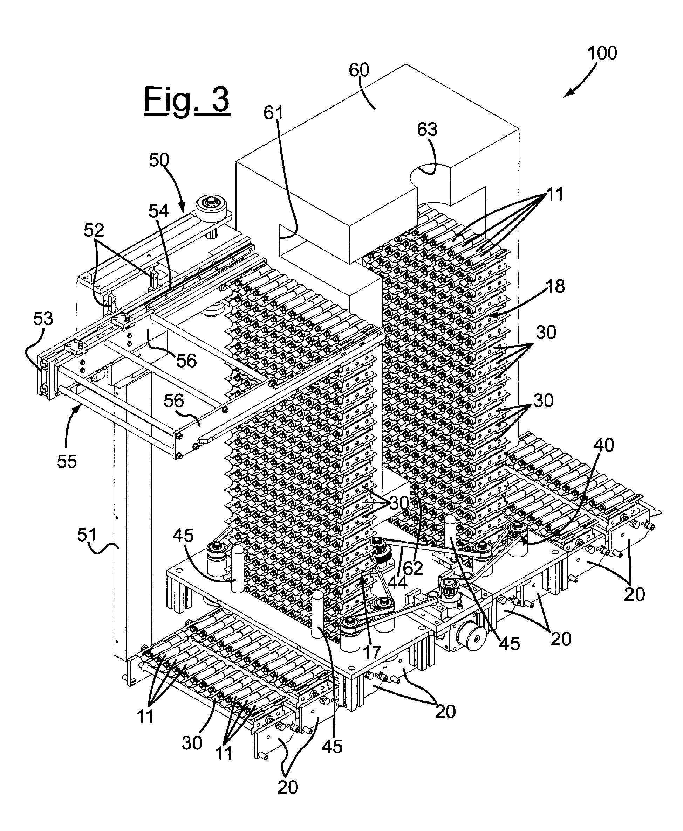

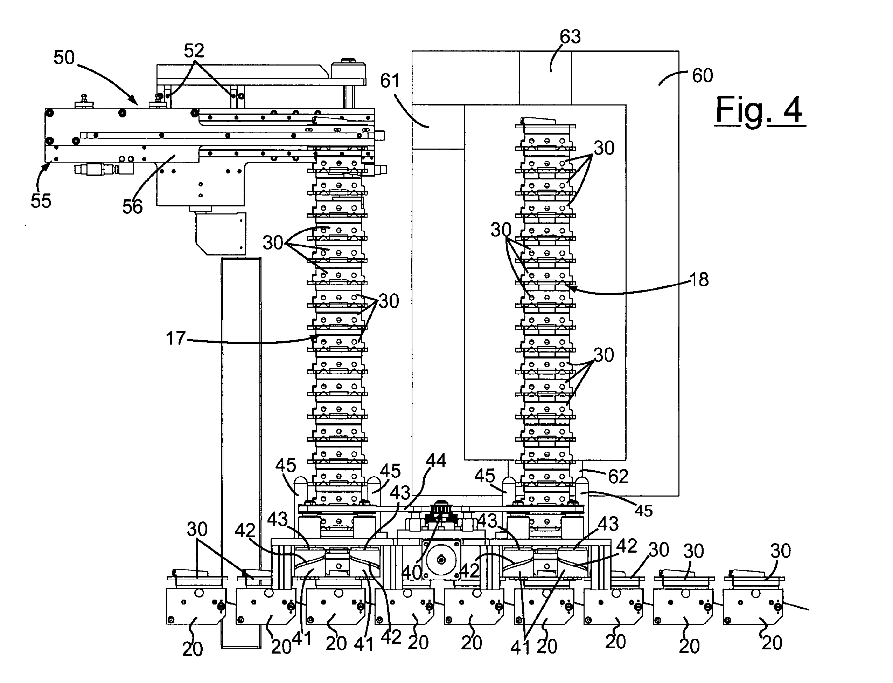

figures 3 and 4 are respectively a perspective view and a side elevational view of some details of the furnace of figures 1 and 2, in which, for the sake of clarity, the conveying plane of a piece-carrying tray according to a first embodiment is shown simplified;

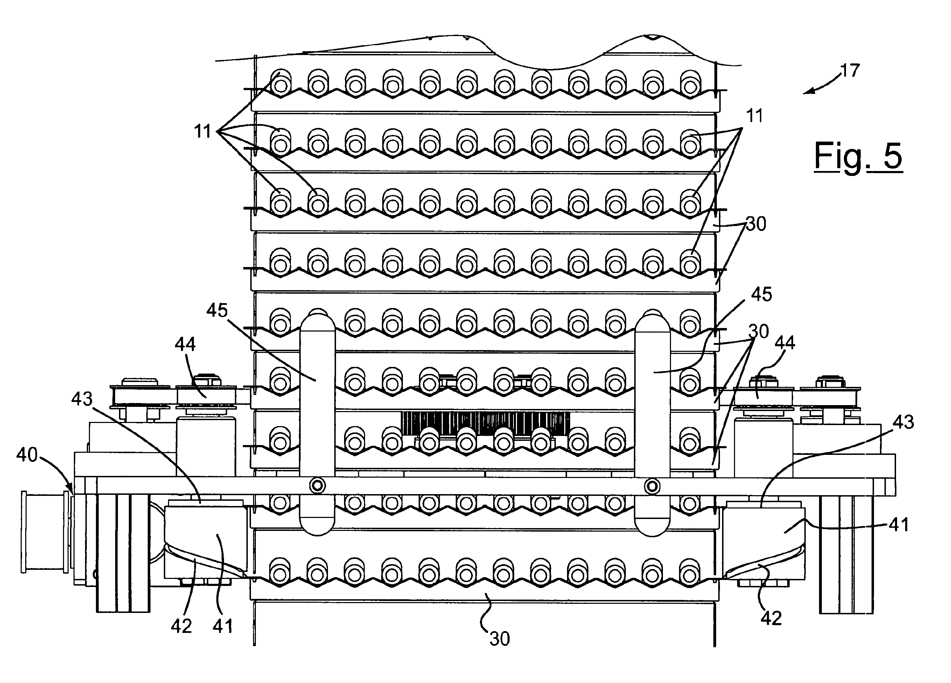

figure 5 shows an enlarged detail of the lifting and lowering means of the conveyor device with accumulation buffer according to the invention;

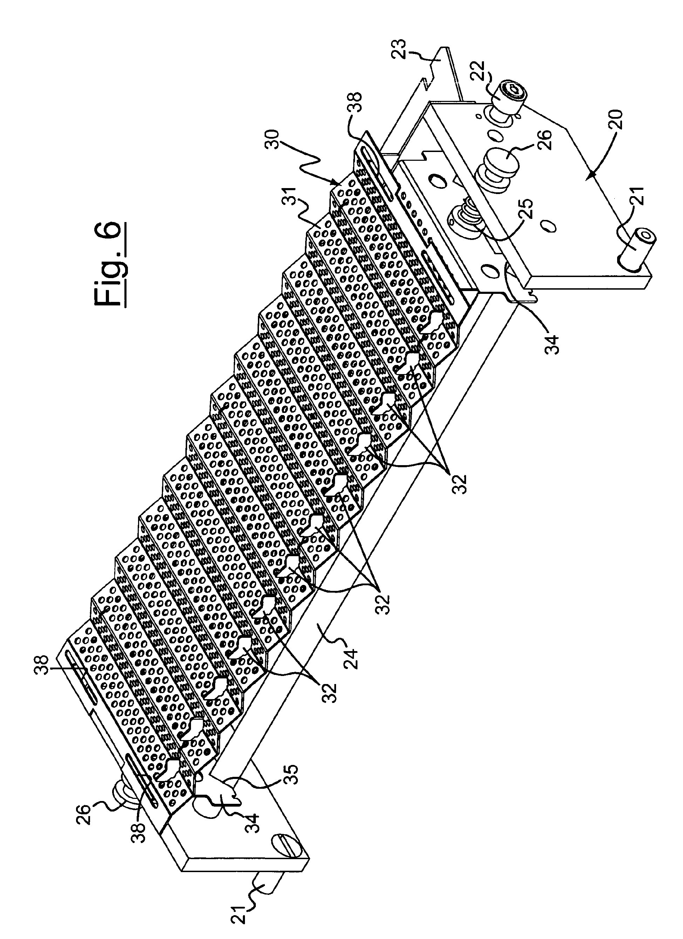

figure 6 is a perspective view of a shuttle of the conveyor with accumulation buffer, according to the invention, provided with a piece-carrying tray;

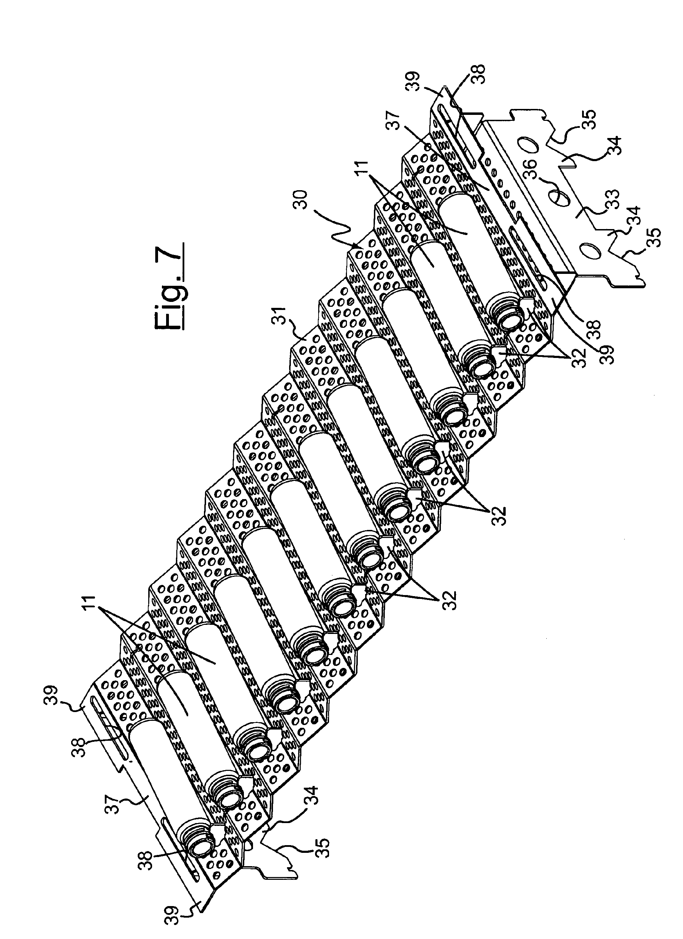

figure 7 shows a piece-carrying tray according to the first embodiment on which glass containers are arranged;

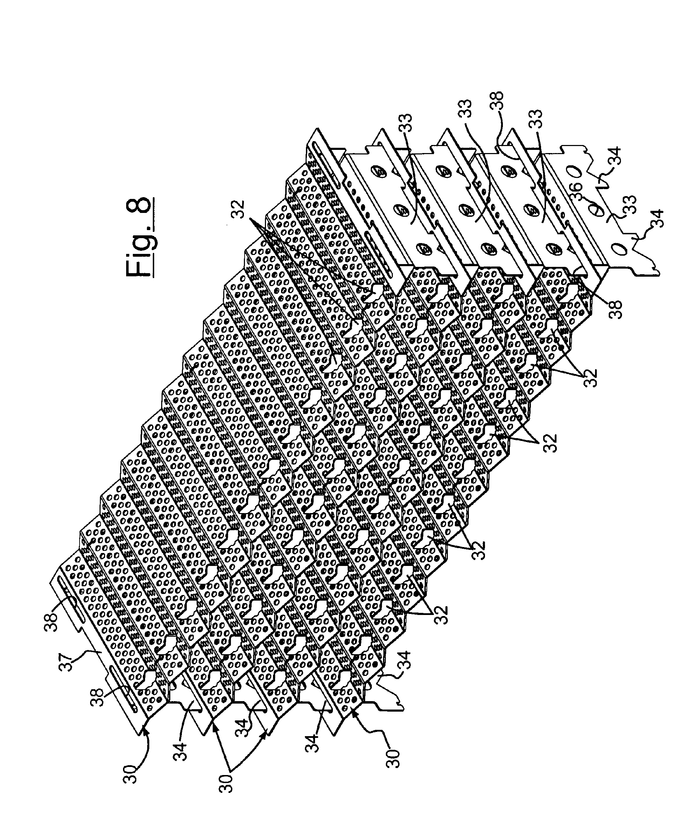

figure 8 shows a plurality of piece-carrying trays, like those of figure 7, stacked one on top of the other;
figure 9 shows two piece-carrying trays, according to a further embodiment, stacked one on top of the other;
figure 10 shows a third embodiment of a piece-carrying tray according to the invention, which can be stacked similarly to what is shown in figure 9.

With reference to the figures, a conveyor device with accumulation buffer is shown for a furnace for continuous heat treatment of glass containers, wholly indicated with reference numeral 10, as well as a relative furnace indicated with reference numeral 100.

The conveyor device with accumulation buffer 10 comprises a structure 12 and a pair of chains 13 arranged on opposite sides of the structure 12 that wind up in a closed loop onto end pulleys 14 to define an upper conveying branch and a bottom return branch.

The conveying device 10 comprises a plurality of shuttles 20 that, at opposite ends, are hinged to the chains 13 and fastened in a tilting manner to the structure 12 and just as many piece-carrying trays 30. Each of the piece-carrying trays 30 can be stably but removably fastened to each of the shuttles 20.

Each piece-carrying tray 30 comprises a conveying plane provided with a plurality of crests and valleys in a transversal direction, which according to a first embodiment is a corrugated plane of bored metal 31.

A support 32 for a neck portion of a container 11 is associated with each valley suitable for receiving a bottom portion of the container.

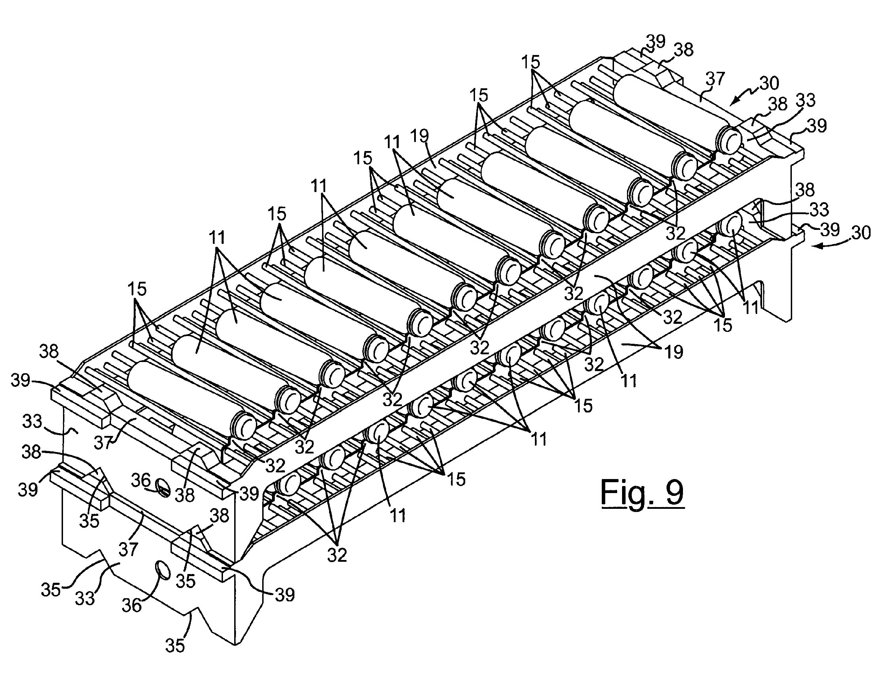

According to a further embodiment shown in figure 9, the piece-carrying tray 30 comprises a conveying plane consisting of a plurality of metal rods 15 parallel to the conveying direction and arranged at different heights to form the plurality of crests and valleys in a transversal direction, in which each valley has the support 32 for the neck of the glass containers 11 associated with it. The parallel rods 15 are, for example, fastened to at least one or more side shoulders 19 of the conveying plane.

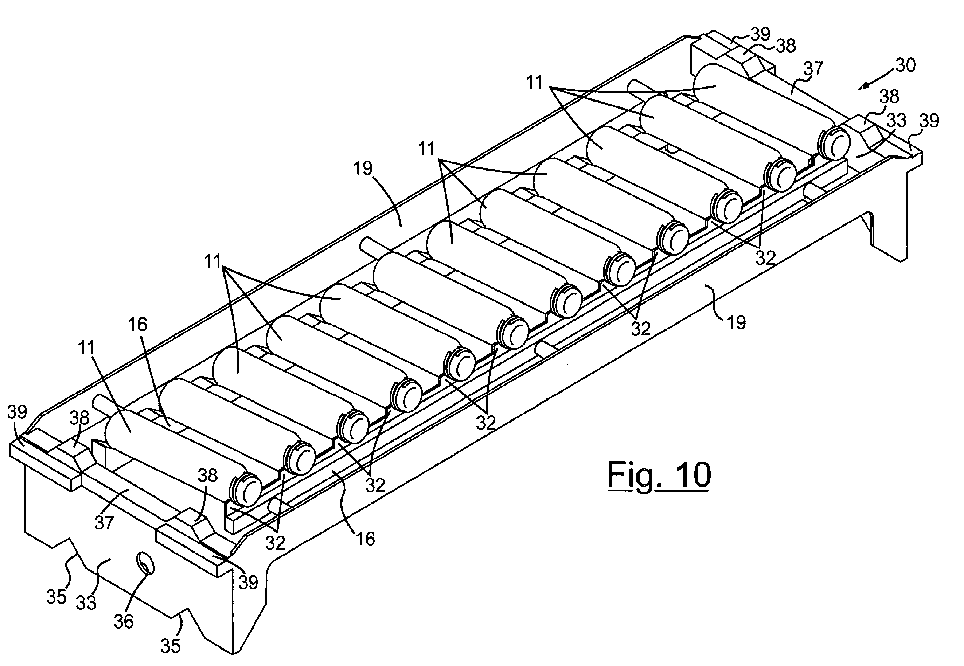

Figure 10 shows a third embodiment of a piece-carrying tray 30, in which the conveying plane comprises two transversal rods 16, respectively equipped with supports 32 for the neck of the containers 11 as well as with the plurality of crests and valleys in a transversal direction. The transversal rods 16 are, for example, fastened to one or more side shoulders 19 of the conveying plane.

The conveyor device 10 also comprises lifting and lowering means of the trays 40, where by lifting and lowering we mean movement up and down. The means 40 carry out the lifting of the tray 30 at the base of a first buffer column 17 of trays and the lowering of the tray 30 at the base of a second buffer column 18 of trays, in which the two buffer columns 17, 18 are arranged in succession on the upper branch of the conveyor device 10 in the direction of movement of the shuttles 20.

The conveyor device 10, according to the invention, also comprises a height-adjustable horizontal transfer slide 50 for transferring the tray 30 which is at the top of the first buffer column 17 to the top of the second buffer column 18.

According to the shown embodiment, the shuttles 20 comprise, at opposite ends, a driving pin 21 coupled with the relative chain 13 and a guide pin 22, preferably provided with an idle roller at the end, coupled with a groove for guiding the structure 12, which is not shown.

The shuttles 20 are arranged side by side and equally spaced apart on the structure 12 and are provided on one side, in the direction of movement, with a protective plate 23 that creates a continuity of the conveying plane so as to avoid the accidental falling of pieces inside the structure 12. The shuttles 20 also comprise, for coupling with the piece-carrying trays 30, transversal support rods 24 and two opposite spring buttons 25, equipped with an engagement head 26, at the end facing towards the structure 12, suitable for interacting with cams, arranged on the two sides of the structure on the path of the shuttles 20, to hook and release the tray 30.

As well as being able to each be fastened to a shuttle 20, the piece-carrying trays 30, can also be stacked on top of one another to form the buffer columns of trays 17, 18.

Each piece-carrying tray 30 indeed comprises, at the opposite ends, constraint means to the shuttle 20, to the transfer slide 50, to the lifting and lowering means 40, as well as to the tray 30 placed above and/or below it.

The constraint means of the trays 30 comprise a vertical support plate 33 equipped with two "V"-shaped seats 35 for coupling with the two transversal rods 24 of the shuttles 20.

The support plate 33 is also provided with at least one hole 36, in which the spring-loaded button 25 of the shuttles 20, as well as the horizontal transfer slide 50, are engaged.

Preferably the hole 36 is in an asymmetric position on the support plate 33, as shown in figures 9 and 10, so as to identify a single possible arrangement on the conveyor device 10, according to the invention.

The constraint means of the trays 30 also comprise an extension plane 37 of the conveying plane of containers 11, perpendicular to the support plate 33, provided with two seats 38 for coupling with a bottom portion of the support plate 33 of the tray 30 placed above.

The extension plane 37 also has protruding rims 39 associated with it for coupling with the lifting and lowering means.

The coupling between the stacked trays 30, as well as between the shuttles 20 and the trays 30 is obtained with at least one degree of freedom, or in any case clearance, which allows thermal expansion during the transit in an area of the heated furnace.

In the tray 30, according to the first embodiment, the bottom portion of the support plate 33 is shaped so as to form two feet 34, each provided with the "V"-shaped seat 35, suitable for being inserted in corresponding slots that constitute the seats 38.

According to the further embodiments of figures 9 and 10, the seats 38 of the extension plane 37 are protrusions, having a "V"-shaped profile, flat at the top, on which the sides of the "V"-shaped seats 35 of the support plates 33 rest, as shown as an example in figure 9.

The lifting and lowering means 40 of the piece-carrying trays 30 comprise for each buffer column of trays 17, 18 at least one pair of synchronised helical cams 41, arranged at opposite ends of each tray 30, in which each helical cam 41 comprises a helical groove 42 that can be coupled with the protruding rims 39 of the tray 30. In the embodiment shown, preferably two helical cams 41 are provided at each end of each buffer column 17, 18.

The helical cams 41 are provided with an upper edge 43 suitable for receiving the protruding rims 39 of the tray 30 at the end of the stroke.

In order to ensure the perfect synchronization of the movements of the two buffer columns 17, 18 in a simple and reliable way, all the helical cams 41 are preferably synchronised through a single belt 44.

According to the preferred embodiment of the conveyor device 10 according to the invention shown and described, the lifting and lowering means comprise side containment elements 45 of the stacked trays 30, for example made up of pins, which guide the buffer columns 17, 18 of trays while lifting and lowering.

The horizontal transfer slide 50 comprises at least one vertical upright 51, provided with rectilinear sliding guides 52, and a height-adjustable cross member 53 along the vertical guides 52, arranged perpendicular to the upright 51.

The height-adjustable cross member 53 also comprises rectilinear sliding guides 54 along which a trolley 55 comprising two opposite arms 56 is moved, suitable for laterally engaging on opposite sides of a tray 30.

The two opposite arms 56 of the trolley 55 are able to be moved apart and together for the operations of engaging and disengaging with the constraint means of the tray 30.

In particular, the opposite arms 56 are, for example, each equipped with at least one pin, not shown, matching the at least one hole 36 of each of the plates 33 of the trays 30. According to the invention, the conveyor device with accumulation buffer 10, can be provided with heating means of a furnace 100 for continuous heat treatment of glass containers.

A heating chamber 60 is arranged around the second buffer column 18 that comprises the trays 30 being lowered.

The heating chamber 60 comprises, in the top part, a side opening 61 for the passage of the trolley 55 of the horizontal transfer slide 50. An opening of the lower wall 62 allows the second column of trays 18 to pass.

A circular hole 63 in the upper wall allows the combusted gas to be sucked in and evacuated from the heating chamber 60.

In the furnace 100 according to the invention, the first buffer column of trays 17 is a cold column, whereas the second buffer column of trays 18, positioned downstream of the first, is a hot column.

In the conveyor device with accumulation buffer, according to the invention, the shuttles 20, which are arranged side by side on the chains 13, rotate in a closed loop on the structure 12.

Each shuttle 20 carries a piece-carrying tray 30, except for in the portion between the two buffer columns of trays 17, 18.

The second buffer column 18 comprises one extra tray 30 with respect to the first buffer column 17. The absolute number of trays 30 can, on the other hand, be modified according to the accumulation operative requirements.

At the beginning of the upper conveying branch, on each piece-carrying tray 30 the glass containers 11 are positioned, which can have different shapes from those shown as an example, each with its neck resting on the support 32.

When the shuttle 20, provided with a piece-carrying tray 30 carrying the containers 11 to be transported, is at the first buffer column 17, the spring buttons 25, that hold the tray 30 at the shuttle 20, are released by the relative cam arranged on the track of the shuttles 20 along the structure 12 and the tray 30 is delivered to the helical cams 41, which lift it one step until it is discharged on their upper edge 43.

During the lifting movement by means of the helical cams 41, the tray 30 engages, from below, with the tray 30 previously lifted and discharged onto the upper edge 43 of the helical cams 41, causing in this way the lifting of the entire first buffer column 17 of a quantity equal to the height of a tray 30.

Simultaneously, the second buffer column 18 is lowered by a step through an analogous action of the helical cams 41 on the last tray 30 of the column 18, which at the end of the lowering, is released from the helical cams 41 and is delivered to the underlying shuttle 20, the spring button 25 of which is in the open position and is then released to hold the tray 30.

The horizontal transfer slide 50 acts upon the top of the first buffer column 17, taking the first tray 30 on the top and transferring it to the top of the second buffer column 18.

The transfer slide 50 intervenes on the tray 30 with a three dimensional movement. The trolley 55 comes closer to the tray 30 horizontally, with the arms 56 in a position spaced apart and brings the arms 56 together when it is in the position for holding the tray 30. The cross member 53 rises vertically to lift the tray 30 from the underlying one and the trolley 55 continues its horizontal stroke, with its arms 56 closed, towards the second buffer column 18. When it is at the second column 18, the cross member 53 lowers itself to deposit the tray 30 on the top of the column 18 and the arms 56 move away to disengage from the tray 30. The transfer slide 50 returns to the initial resting position, on the side with respect to the first column 17. At the end of the upper conveying branch, the containers 11 are taken from the piece-carrying trays 30.

When the conveyor device 10 is integrated in a furnace 100 according to the invention the second buffer column 18 is a hot column surrounded by the heated chamber 60.

During the progressive descent of the trays 30 carrying the glass containers 11 in the hot column 18, the glass containers 11 undergo an annealing heat treatment with a temperature curve which causes a rapid increase of the temperature in the initial treatment phase and a slower reduction of the temperature in the final treatment phase. The duration of the treatment is directly correlated to the height of the heating chamber 60. To a lesser extent, the duration of the treatment is also affected by the speed at which the helical cams 41 move the hot column 18. Such a parameter can only be modified within a range that, in any case, ensures the stability of the column of trays and the correct mechanical operation.

The heating chamber 60 of the furnace 100 according to the invention has a higher temperature at the top part and a lower temperature at the bottom part. This is both due to the fact that heat naturally tends to rise inside the chamber 60, and to the fact that the lower opening for the passage of the trays unavoidably causes heat dispersion. The configuration of the heating chamber 60 makes it possible to optimise the temperature curve of the annealing treatment of the glass containers 11 in a simple and cost-effective manner.

In the furnace 100 according to the invention, the heating chamber 60 can be replaced with a chamber having a different height, if particular glass containers require a longer or shorter heat treatment.

The conveyor device with accumulation buffer for continuous heat treatment of glass containers, object of the present invention, has the advantage of having limited plan dimensions, irrespective of the quantity of glass containers that must be able to be received on the conveyor and possibly treated in the furnace.

The conveyor device according to the invention can also advantageously be used as a simple conveyor, without a heating chamber.

The furnace for continuous heat treatment of glass containers according to the invention has the advantage of being intrinsically suitable for heating more in the first phase of the treatment and to gradually reduce the heating in the last phase.

Moreover, advantageously, the size of the heating chamber can be modified with a minimum impact on the structure and on the bulk of the furnace.

The conveyor device with accumulation buffer, as well as the relative furnace for continuous heat treatment of glass containers, thus conceived, can undergo numerous modifications and variants, all covered by the invention; moreover, all the details can be replaced by technically equivalent elements. In practice the materials used, as well as the sizes, can be any according to the technical requirements.

## Claims

1. Conveyor device with accumulation buffer for a furnace for continuous heat treatment of glass containers, comprising a structure (12) and a pair of chains (13) arranged on opposite sides of said structure (12) that wind up in a closed loop onto end pulleys (14) to define an upper conveying branch and a bottom return branch, **characterised in that** it comprises a plurality of shuttles (20), hinged at opposite sides to the chains (13) and fastened in a tilting manner to said structure (12), as well as a plurality of piece-carrying trays (30), in which each of said trays can be stably but removably fastened to each of said shuttles (20), said piece-carrying trays (30) also being able to be stacked on top of one another to form buffer columns of trays (17, 18), said conveyor device (10) also comprising lifting and lowering means (40), respectively of a tray (30) at the base of a first buffer column (17) and of a tray (30) at the base of a second buffer column (18), said buffer columns (17, 18) being arranged in succession on the upper conveying branch in the direction of movement of said shuttles (20), as well as a horizontal transfer slide (50) of a top tray from said first column (17) to said second column (18).

2. Conveyor device according to claim 1, **characterised in that** said piece-carrying tray (30) comprises, at the ends, constraint means to said shuttle (20), to said transfer slide (50), to said lifting and lowering means (40), as well as to one of said trays (30) placed above and/or below.

3. Conveyor device according to claim 2, **characterised in that** said constraint means comprise at each end a support plate (33), provided with at least one hole (36), as well as an extension plane (37), perpendicular to said plate (33), provided with seats (38) for coupling with a bottom portion of said support plate (33) of a tray (30) placed above and with protruding rims (39).

4. Conveyor device according to claim 3, **characterised in that** each of said support plates (33) comprises two V-shaped seats (35) for coupling with two transversal rods (24) of said shuttles (20).

5. Conveyor device according to claim 4, **characterised in that** said piece-carrying tray (30) comprises a conveying plane (31, 15, 16) provided with a plurality of crests and valleys in a transversal direction, in which each valley has a support (32) for a portion of a glass container (11).

6. Conveyor device according to claim 4, **characterised in that** said conveying plane is a corrugated plane of bored metal (31).

7. Conveyor device according to claim 4, **characterised in that** said conveying plane comprises a plurality of metal rods (15) parallel to the conveying direction and arranged at different heights to form crests and valley in a transversal direction.

8. Conveyor device according to claim 4, **characterised in that** said conveying plane comprises two transversal rods (16), respectively equipped with a plurality of said supports (32), as well as with said plurality of crests and valleys in a transversal direction.

9. Conveyor device according to claim 3, **characterised in that** said shuttles (20) comprise, at each end, a spring-loaded button (25) suitable for engaging in said at least one hole (36) of the plate (33) of the piece-carrying tray (30), said spring-loaded button (25) being provided with an engagement head (26) to actuate the release of the tray (30).

10. Conveyor device according to claim 9, **characterised in that** each of said shuttles (20) comprises, at opposite ends, a driving pin (21) coupled with said chains (13) and a guide pin (22) coupled with a groove of the structure.

11. Conveyor device according to claim 1, **characterised in that** said lifting and lowering means (40) comprise, for each buffer column (17, 18) of trays, at least one pair of helical cams (41) that are synchronised and arranged at opposite ends of each of said buffer columns (17, 18), in which each helical cam (41) comprises a helical groove (42) and an upper edge (43) that can be coupled with protruding rims (39) of said trays (30).

12. Conveyor device according to claim 11, **characterised in that** it comprises two helical cams (41) at each end of each tray (30), said helical cams (41) being synchronised through a single belt (44).

13. Conveyor device according to claim 1, **characterised in that** said horizontal transfer slide (50) is height-adjustable.

14. Conveyor device according to claim 13, **characterised in that** said horizontal transfer slide (50) comprises at least one vertical upright (51) and a perpendicular cross member (53) that is height-adjustable on said upright (51), said cross member (53) having a trolley (55) slidably connected to it, provided with two opposite arms (56) able to be moved apart and together.

15. Furnace for continuous heat treatment of glass containers, comprising a conveyor device (10) according to any one of the previous claims, comprising a heating chamber (60) arranged around said second buffer column (18) of lowering trays, in which said heating chamber (60) comprises at least one side opening (61), in the top part, for the passage of said horizontal transfer slide (50) and, at the bottom, an opening (62) for the passage of said second buffer column of trays (18).

## Patentansprüche

1. Fördereinrichtung mit Sammelpuffer für einen Ofen für eine kontinuierliche Wärmebehandlung von Glasbehältern, umfassend einen Aufbau (12) und ein Paar Ketten (13), die auf entgegengesetzten Seiten des Aufbaus (12) angeordnet sind und sich in einer geschlossenen Schleife um Endscheiben (14) wickeln, um einen oberen Förderzweig und einen unteren Rückkehrzweig zu definieren, **dadurch**
**gekennzeichnet, dass**
sie eine Vielzahl von Schiffchen (20), die an entgegengesetzten Seiten an den Ketten (13) angelenkt und auf eine kippende Weise an dem Aufbau (12) befestigt sind, sowie eine Vielzahl von Stücktragschalen (30), wobei jede der Schalen stabil aber abnehmbar an jedem der Schiffchen (20) befestigt sein kann, wobei die Stücktragschalen (30) auch übereinandergestapelt werden können, um Puffersäulen aus Schalen (17, 18) zu bilden, wobei die Fördereinrichtung (10) auch Hebe- und Ablenkmittel (40) jeweils einer Schale (30) an der Basis einer ersten Puffersäule (17) bzw, einer Schale (30) an der Basis einer zweiten Puffersäule (18) umfasst, wobei die Puffersäulen (17, 18) aufeinanderfolgend an dem oberen Förderzweig in der Bewegungsrichtung der Schiffchen (20) angeordnet sind, sowie einen horizontalen Überführungsschlitten (50) einer oberen Schale von der ersten Säule (17) zu der zweiten Säule (18) umfasst.

2. Fördereinrichtung nach Anspruch 1,
**dadurch gekennzeichnet, dass**
die Stücktragschale (30) an den Enden Begrenzungsmittel zu dem Schiffchen (20), zu dem Überführungsschlitten (50), zu den Hebe- und Absenkmitteln (40) sowie zu einer der Schalen (30), die darüber und/oder darunter platziert ist, umfasst.

3. Fördereinrichtung nach Anspruch 2,
**dadurch gekennzeichnet, dass**
die Begrenzungsmittel an jedem Ende eine Trägerplatte (33) umfassen, die mit zumindest einem Loch (36) sowie einer Verlängerungsebene (37) senkrecht zu der Platte (33) versehen ist, die mit Sitzen (38) zur Kopplung mit einem unteren Abschnitt der Trägerplatte (33) einer Schale (30), die darüber platziert ist, und mit vorstehenden Rändern (39) versehen ist.

4. Fördereinrichtung nach Anspruch 3,
**dadurch gekennzeichnet, dass**
jede der Trägerplatten (33) zwei V-förmige Sitze (35) zur Kopplung mit zwei Querstäben (24) der Schiffchen (20) umfasst.

5. Fördereinrichtung nach Anspruch 4,
**dadurch gekennzeichnet, dass**
die Stücktragschale (30) eine Förderebene (31, 15, 16) umfasst, die mit einer Vielzahl von Scheiteln und Tälern in einer Querrichtung versehen ist, wobei jedes Tal einen Träger (32) für einen Abschnitt eines Glasbehälters (11) aufweist.

6. Fördereinrichtung nach Anspruch 4,
**dadurch gekennzeichnet, dass**
die Förderebene eine gewellte Ebene eines mit Bohrungen versehenen Metalls (31) ist.

7. Fördereinrichtung nach Anspruch 4,
**dadurch gekennzeichnet, dass**
die Förderebene eine Vielzahl von Metallstäben (15) umfasst, die parallel zu der Förderrichtung liegen und in unterschiedlichen Höhen angeordnet sind, um Scheitel und Tal in einer Querrichtung zu bilden.

8. Fördereinrichtung nach Anspruch 4,
**dadurch gekennzeichnet, dass**
die Förderebene zwei Querstäbe (16) umfasst, die jeweils mit einer Vielzahl der Träger (32) sowie mit der Vielzahl von Scheiteln und Tälern in einer Querrichtung ausgestattet ist.

9. Fördereinrichtung nach Anspruch 3,
**dadurch gekennzeichnet, dass**
die Schiffchen (20) an jedem Ende einen federbelasteten Knopf (25) umfassen, der zum Eingriff in dem zumindest einem Loch (36) der Platte (33) der Stücktragschale (30) geeignet ist, wobei der federbelastete Knopf (25) mit einem Eingriffskopf (26) zum Auslösen der Freigabe der Schale (30) versehen ist.

10. Fördereinrichtung nach Anspruch 9,
**dadurch gekennzeichnet, dass**
jedes der Schiffchen (20) an entgegengesetzten Enden einen Antriebsstift (21), der mit den Ketten (13) gekoppelt ist, und einen Führungsstift (22), der mit einer Nut des Aufbaus gekoppelt ist, umfasst.

11. Fördereinrichtung nach Anspruch 1,
**dadurch gekennzeichnet, dass**
die Hebe- und Absenkmittel (40) für jede Puffersäule (17, 18) von Schalen zumindest ein Paar Wendelnocken (41) umfassen, die synchronisiert und an entgegengesetzten Enden von jeder der Puffersäulen (17, 18) angeordnet sind, wobei jeder Wendelnocken (41) eine Wendelnut (42) und eine obere Kante (43) umfasst, die mit vorstehenden Rändern (39) der Schalen (30) gekoppelt sein kann.

12. Fördereinrichtung nach Anspruch 11,
**dadurch gekennzeichnet, dass**
sie zwei Wendelnocken (41) an jedem Ende jeder Schale (30) umfasst, wobei die Wendelnocken (41) durch einen einzigen Riemen (44) synchronisiert sind.

13. Fördereinrichtung nach Anspruch 1,
**dadurch gekennzeichnet, dass**
der horizontale Überführungsschlitten (50) höhenverstellbar ist.

14. Fördereinrichtung nach Anspruch 13,
**dadurch gekennzeichnet, dass**
der horizontale Überführungsschlitten (50) zumindest einen vertikalen Pfosten (51) und ein rechtwinkliges Querelement (53) umfasst, das an dem Pfosten (51) höhenverstellbar ist, wobei das Querelement (53) einen Wagen (55) aufweist, der damit verschiebbar verbunden ist, welcher mit zwei entgegengesetzten Armen (56) versehen ist, die voneinander weg und aufeinander zu bewegbar sind.

15. Ofen für eine kontinuierliche Wärmebehandlung von Glasbehältern mit einer Fördereinrichtung (10) nach einem der vorhergehenden Ansprüche, der eine Wärmekammer (60) umfasst, die um die zweite Puffersäule (18) von absinkenden Schalen herum angeordnet ist, wobei die Wärmekammer (60) zumindest eine Seitenöffnung (61) in dem oberen Teil für den Durchgang des horizontalen Überführungsschlittens (50) und an der Unterseite eine Öffnung (62) für den Durchgang der zweiten Puffersäule von Schalen (18) umfasst.

## Revendications

1. Dispositif de convoyage à tampon d'accumulation pour four de traitement thermique en continu de récipients en verre, comprenant une structure (12) et une paire de chaînes (13) placées sur des côtés opposés de ladite structure (12) qui s'enroulent en boucle fermée sur des poulies d'extrémité (14) pour définir une branche de convoyage supérieure et une branche de retour inférieure, **caractérisé en ce qu'**il comprend une pluralité de navettes (20), articulées sur les chaînes (13) en des côtés opposés et fixées à ladite structure (12) de manière basculante, ainsi qu'une pluralité de plateaux de transport de pièce (30), dans lequel chacun desdits plateaux peut être fixé de manière stable mais amovible à chacune desdites navettes (20), lesdits plateaux de transport de pièce (30) étant aussi aptes à être empilés les uns sur les autres pour former des colonnes tampons de plateaux (17, 18), ledit dispositif de convoyage (10) comprenant en outre un moyen de levage et d'abaissement (40), respectivement d'un plateau (30) à la base d'une première colonne tampon (17) et d'un plateau (30) à la base d'une deuxième colonne tampon (18), lesdites colonnes tampons (17, 18) étant placées les unes à la suite des autres sur la branche de convoyage supérieure dans la direction de déplacement desdites navettes (20), ainsi qu'un coulisseau de transfert horizontal (50) d'un plateau supérieur de ladite première colonne (17) à ladite deuxième colonne (18).

2. Dispositif de convoyage selon la revendication 1, **caractérisé en ce que** ledit plateau de transport de pièce (30) comprend, à ses extrémités, un moyen de contrainte pour ladite navette (20), pour ledit coulisseau de transfert (50), pour ledit moyen de levage et d'abaissement (40) ainsi que pour l'un desdits plateaux (30) placé au-dessus et/ou en dessous.

3. Dispositif de convoyage selon la revendication 2, **caractérisé en ce que** ledit moyen de contrainte comprend à chaque extrémité une plaque de support (33), pourvue d'au moins un trou (36), ainsi qu'un plan d'extension (37), perpendiculaire à ladite plaque (33), pourvu de sièges (38) permettant l'accouplement avec une partie inférieure de ladite plaque de support (33) d'un plateau (30) placé au-dessus et avec des rebords saillants (39).

4. Dispositif de convoyage selon la revendication 3, **caractérisé en ce que** chacune desdites plaques de support (33) comprend deux sièges en forme de V (35) permettant l'accouplement avec deux tiges transversales (24) desdites navettes (20).

5. Dispositif de convoyage selon la revendication 4, **caractérisé en ce que** ledit plateau de transport de pièce (30) comprend un plan de convoyage (31, 15, 16) pourvu d'une pluralité de creux et de bosses dans une direction transversale, dans lequel chaque creux comporte un support (32) pour une partie d'un récipient en verre (11).

6. Dispositif de convoyage selon la revendication 4, **caractérisé en ce que** ledit plan de convoyage est un plan ondulé en métal perforé (31).

7. Dispositif de convoyage selon la revendication 4, **caractérisé en ce que** ledit plan de convoyage comprend une pluralité de tiges métalliques (15) parallèles à la direction de convoyage et placées à différentes hauteurs pour former des creux et des bosses dans une direction transversale.

8. Dispositif de convoyage selon la revendication 4, **caractérisé en ce que** ledit plan de convoyage comprend deux tiges transversales (16), respectivement munies d'une pluralité desdits supports (32), ainsi que de ladite pluralité de creux et de bosses dans une direction transversale.

9. Dispositif de convoyage selon la revendication 3, **caractérisé en ce que** lesdites navettes (20) comprennent, à chaque extrémité, un bouton à ressort (25) adapté pour s'engager dans ledit au moins un trou (36) de la plaque (33) du plateau de transport de pièce (30), ledit bouton à ressort (25) étant pourvu d'une tête d'accrochage (26) pour déclencher la libération du plateau (30).

10. Dispositif de convoyage selon la revendication 9, **caractérisé en ce que** chacune desdites navettes (20) comprend, en ses extrémités opposées, un axe d'entraînement (21) couplé auxdites chaînes (13) et un axe de guidage (22) couplé à une rainure de la structure.

11. Dispositif de convoyage selon la revendication 1, **caractérisé en ce que** ledit moyen de levage et d'abaissement (40) comprend, pour chaque colonne tampon (17, 18) de plateaux, au moins une paire de cames hélicoïdales (41) qui sont synchronisées et disposées aux extrémités opposées de chacune desdites colonnes tampons (17, 18), dans lesquelles chaque came hélicoïdale (41) comprend une rainure hélicoïdale (42) et un bord supérieur (43) qui peuvent être accouplés aux rebords saillants (39) desdits plateaux (30).

12. Dispositif de convoyage selon la revendication 11, **caractérisé en ce qu'**il comprend deux cames hélicoïdales (41) à chaque extrémité de chaque plateau (30), lesdites cames hélicoïdales (41) étant synchronisées au moyen d'une seule courroie (44).

13. Dispositif de convoyage selon la revendication 1, **caractérisé en ce que** ledit coulisseau de transfert horizontal (50) est réglable en hauteur.

14. Dispositif de convoyage selon la revendication 13, **caractérisé en ce que** ledit coulisseau de transfert horizontal (50) comprend au moins un montant vertical (51) et un élément transversal perpendiculaire (53) qui est réglable en hauteur sur ledit montant (51), ledit élément transversal (53) comportant un chariot (55) connecté à ce dernier de manière glissante, pourvu de deux bras opposés (56) aptes à être écartés et rapprochés l'un de l'autre.

15. Four de traitement thermique en continu de récipients en verre, comprenant un dispositif de convoyage (10) selon l'une quelconque des revendications précédentes, comprenant une chambre de chauffage (60) disposée autour de ladite deuxième colonne tampon (18) de plateaux de descente, dans lequel ladite chambre de chauffage (60) comprend au moins une ouverture latérale (61), dans la partie supérieure, pour le passage dudit coulisseau de transfert horizontal (50) et, dans la partie inférieure, une ouverture (62) pour le passage de ladite deuxième colonne tampon de plateaux (18).
